(19) Europäisches Patentamt

European Patent Office

Office européen des brevets

(11) **EP 0 950 439 B1**

(12) **EUROPÄISCHE PATENTSCHRIFT**

(45) Veröffentlichungstag und Bekanntmachung des Hinweises auf die Patenterteilung:
**20.10.2004   Patentblatt 2004/43**

(51) Int Cl.⁷: **B09B 1/00**

(21) Anmeldenummer: **99890122.7**

(22) Anmeldetag: **14.04.1999**

(54) **Verfahren zur integralen Abdeckung von Abfalldeponien**

Method for integrally covering waste dumps

Procédé pour le revêtement intégral de décharges

(84) Benannte Vertragsstaaten:
**AT CH DE ES FR GR IT LI NL SE**

(30) Priorität: **15.04.1998  AT  63998**

(43) Veröffentlichungstag der Anmeldung:
**20.10.1999   Patentblatt 1999/42**

(73) Patentinhaber: **Husz, Georg Stefan, Dipl. Ing. Dr.
1130 Wien (AT)**

(72) Erfinder: **Husz, Georg Stefan, Dipl. Ing. Dr.
1130 Wien (AT)**

(74) Vertreter: **Patentanwälte
BARGER, PISO & PARTNER
Mahlerstrasse 9
Postfach 96
1015 Wien (AT)**

(56) Entgegenhaltungen:
WO-A-95/02565          AT-B- 401 051
DE-A- 3 444 895        DE-A- 19 534 874
US-A- 5 690 448

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Abdeckung von Abfalldeponien ist in den meisten europäischen Ländern durch Gesetz bzw. Verordnung geregelt. Dabei wird (in Österreich) der Stand der Technik vorgeschrieben (Österr. Deponieverordnung BGB1. Nr. 164, April 1996). Wichtigstes Ziel ist die Trennung des Deponiekörpers von seiner Umgebung, um Luft, Wasser und Boden, Vegetation und Fauna sowie nicht zuletzt den Menschen vor möglichen Gefahren, die von Deponiekörpern ausgehen können, zu schützen. Dies sind insbesondere Emissionen von Gasen, kontaminiertem Deponie-Sickerwasser, Abtragungen (Erosionen) usw. (Schutz öffentlicher Interessen im Sinne § 1 Abs. 3 AWG).

Sinnvolle Abweichungen von den offiziellen gesetzlichen bzw. normativen Regelwerken besonders für Sonderfälle in Hanglagen bzw. hängigen Deponieabdeckungen werden von den Offenlegungsschriften DE 3919902 A1 und DE 3444895 A1 vorgeschlagen.

Dabei geht die erstere von einer mechanisch aufgebauten Zellstruktur aus, die flexibel und wasserdurchlässig ist und in welche "zugfeste Stabilisierungsbänder integriert" sind. Dieses Verfahren stellt eine Weiterentwicklung des Verfahrens dar, das in DE 3021825 A1 beschrieben ist und soll auch für besonders steile Hänge mit glatter Oberfläche, wie sie durch Folienab-deckungen unvermeidbar sind, geeignet sein.

Auch die Offenlegungsschrift DE 3444895 A1 geht von einem Konzept aus, das die üblichen Anforderungen an eine Deponieabdeckung mittels Kunststoff-Flies und Kunststoff-Folien erfüllt, aber duch sinnvolle Anordnung eine sogenannte "Sandwichplatte geringer Dicke" herstellt und damit eine wesentliche Verringerung der Gesamtabdeckschicht erreicht.

Aufgabe der vorliegenden Erfindung ist ein wirtschaftlich technisch und ökologisch vorteilhaftes Verfahren zur integralen Abdeckung von Abfalldeponien.

Diese Aufgabe wird erfindungsgemäß durch das im Anspruch 1 definierte Verfahren gelöst. Damit wird eine Vereinfachung und Kosteneinsparung gegenüber dem aktuellen Stand der Technik dadurch erreicht, daß nur noch eine oder höchstens zwei Schichten anstatt bisher mehrerer Schichten ("Kombinationsdichtung") aufgebaut werden.

Das erfindungsgemäße Verfahren entspricht außerdem viel mehr den natürlichen, landschaftsökologischen Anforderungen, vermag Wasserhaushaltsschwankungen abzupuffern und auftretende Deponie-Emissionen einschließlich Gase (Methan, Schwefelwasserstoff) zu filtern bzw. zu adsorbieren oder in standortsgemäße Bodenstoffe umzuwandeln. Im hängigen Gelände kann die Erosions- und Rutschgefahr verringert bzw. ausgeschaltet werden. Gleichzeitig dient die Abdeckschicht als "Rekultivierungsschicht", die für die aufzubauende Vegetationsdecke optimiert werden kann. Das Verfahren integriert also in einer Schicht mehrere Funktionen.

Das erfindungsgemäße Verfahren entspricht auch den Forderungen und Intentionen des Abfallwirtschaftsgesetzes (AWG; BGB1. Nr. 325/1990 bzw. BGB1. 155/1994), in dem zur Herstellung des Abdeckmaterials Abfallstoffe "stofflich verwertet" werden können, sodaß sowohl für die verwerteten Abfallstoffe als auch für die Abdeckschicht so wenig Nachsorgebedarf wie möglich notwendig ist.

Der aktuelle Stand der Technik besteht in der Herstellung einer sogenannten Kombinationsdichtung (Deponieverordnung 1996, § 2 (20)): Dies "ist eine aus unterschiedlichen Abdichtungsmaterialien meist einander sich ergänzenden Eigenschaften bestehenden Dichtung" und ist aus mehreren Schichten aufgebaut (AWG, Anlage 3, IV):

1. Ausgleichschicht:

Sie besteht aus einem verdichteten grobkörnigen Material (Körnung bis 100 mm) und einer Mindestdicke von 50 mm.

2. Gasdrainschicht

a) Bei Massenabfalldeponien, sofern eine Gasbildung zu erwarten ist und das Gas in der Ausgleichsschicht nicht gefaßt und abgeleitet werden kann, ist eine Gasdrainschicht mit einer Mindestdicke von 0,3 m vorzusehen, die als Teil der Ausgleichsschicht angesehen werden kann.

b) Der Kalzium- und Magnesiumcarbonatanteil des Materials der Entgasungsschicht darf nicht mehr als 30 Gewichtsprozent betragen.

3. Oberflächendichtung

a) Art, Aufbau und Zeitpunkt der Herstellung der Oberflächendichtung sind insbesondere in Abhängigkeit von Deponietyp und -form sowie der abgelagerten Abfälle und der metereologischen Verhältnisse im Einzelfall festzulegen. Abweichungen zum Regelaufbau gemäß lit.b und c oder die Ausführung alternativer Dichtungssysteme, insbesondere im Bereich von Böschungen, sind zulässig.

b) Als Stand der Technik für die Oberflächendichtung von Baurestmassendeponien ist eine mindestens zweilagige, mineralische Dichtungsschicht mit einer Gesamtdicke von mindestens 40 cm in verdichtetem Zustand anzusehen.

c) Als Stand der Technik für die Oberflächendichtung von Reststoff- und Massenabfalldeponien ist eine Kombinationsdichtung, bestehend aus einer mindestens zweilagigen, mineralischen Dichtungsschicht mit einer Dicke von mindestens 20 cm und maximal 27 cm pro Lage in verdichtetem Zustand, mit einer Gesamtdicke von mindestens 50 cm und einer direkt aufliegenden Kunststoffdichtungsbahn mit einer Mindestdicke von 2,5 mm anzusehen. Im Bereich von steilen Deponieböschungen kann aus Gründen der Gleitsicherheit auf den Einbau der Kunststoffdichtungsbahn verzichtet werden.

d) Der Durchlässigkeitsbeiwert (k-Wert) der mineralischen Dichtungsschichten für Oberflächendichtungen darf bei einem hydraulischen Gradienten von i = 30 (Laborwert) $10^{-9}$m/s nicht überschreiten. Darüber hinaus sind die Anforderungen an mineralische Dichtungsschichten für Deponiebasisdichtungen (Punkt II.s) analog zu erfüllen.

e) Unter Berücksichtigung der zu erwartenden Setzungen ist ein Gefälle > 4 % zu gewährleisten.

4. Oberflächenentwässerung

a) Für das über der Oberflächendichtung in einer Mindestdicke von 50 cm herzustellende Oberflächenentwässerungssystem sind die Anforderungen an den Flächenfilter und die Sickerwasserleitungen (Punkt III.1 und III.2) analog zu erfüllen, wobei die Anordnung von Sickerwasserleitungen nicht zwingend ist.

b) Ein Nachweis über die langfristige hydraulische Wirksamkeit und Leistungsfähigkeit des Systems unter Berücksichtigung des Sickerwasseranfalls ist jedenfalls zu führen.

5. Rekultivierungsschicht

a) Die der Folgenutzung anzupassende Rekultivierungsschicht ist insbesondere aus kulturfähigem Boden mit einer Dicke von mindestens 0,5 m herzustellen und muß einen ausreichenden Schutz der Oberflächendichtung und -entwässerung, insbesondere gegen Wurzel- und Frosteinwirkung, gewährleisten.

b) Der bevorstehende Bewuchs hat ausreichenden Schutz gegen Erosion zu bieten.

Die einschlägigen Regelungen der Deponieverordnung machen also Art, Aufbau und Zeitpunkt der Oberflächenabdichtung vom Deponietyp abhängig. Auch die Hängigkeit ist zu berücksichtigen.

Diese Vorgangsweise ist nicht nur wirtschaftlich sehr aufwendig, sie weist auch technische und ökologische Nachteile auf. So ist eine mineralische Abdichtung nie wirklich stabil und weist auch den Nachteil auf, daß bei zu starker Austrocknung Risse entstehen und Undichtigkeiten auftreten können. Ebenso können Wurzelsysteme und wühlende Bodentiere die Dichtigkeit vermindern bzw. im Laufe der Zeit zerstören.

In hängigen Lagen besteht zwischen der Dichtschicht und der Auflage der Rekultivierungsschicht erhöhte Rutschgefahr. Aus diesen und ähnlichen Gründen ist eine Nachsorgepflicht in erhöhtem Maße zu erfüllen.

Unmittelbar auf die Deponieoberfläche wird vorzugsweise, aber nicht notwendigerweise, eine Ausgleichschicht aufgebracht, deren Gestaltung sich nach den Projekterfordernissen richtet: Wenn etwa Gasgewinnung aus der Deponie vorgesehen ist, wird eine Gasdichteschicht sinnvoll sein. Wenn eine Baurestmassen- oder Bodenaushubdeponie vorliegt, wird die Dichtschicht in Kombination mit der erfindungsgemäßen Abdeckung überhaupt wegfallen können. Im Falle einer deutlichen Hangneigung wird zur zusätzlichen Erhöhung des Gleitwiderstandes eine Grobkorn-Ausgleichschicht sinnvoll sein (Kantkorn bis 100 mm Körnungsdurchmesser, je nach Bedarf verdichtet).

Wenn Gefahr eines Austritts von Schadstoffen mit Kapillarwasser besteht, kann die Ausgleichschicht z.B. kalkhaltig gestaltet sein, oder kann die Zwischenschicht als eine "Barriere-Schicht" ausgestattet werden, welche sich nach Art und chemischer Zusammensetzung der potentiellen Schadstoffe ausrichtet.

Auf diese Übergangsschicht ist erfindungsgemäß ein Material aufzubringen, das die Eigenschaften von Erde bzw. Oberbodenmaterial aufweist.

Dieses Material kann natürlicher Herkunft (abgetragene Humusschichten) oder auch Erde aus Abfallstoffen im Sinne des Patentes Nr. AT 401051 B sein. Dabei ist unerheblich, ob die Herstellung dieser Erde über eine Hitzerotte mit Nachrotte oder in einem "Kaltrotte"-Verfahren (ohne Zweiteilung des Prozesses) erfolgte. Vorzugsweise kann in Erweiterung des Patents Nr. AT 401051 B die Erde folgendermaßen hergestellt werden:

Es wird aus geeignetem Ausgangsmaterial nach geltenden Richtlinien Kompost hergestellt. Dieser wird dann mit mineralischem Material (Sanden, Lehmen, Tonen) so vermengt, daß die Eigenschaften einer Erde bzw. von Oberbodenmaterial entsteht, das die ökologischen Funktionen von Oberbodenmaterial übernehmen kann und den Kennwerten der jeweils geltenden Regelwerke (Normungsempfehlungen und Gesetzesauflagen) entspricht.

Alternativ dazu kann auch so vorgegangen werden, daß eine Rezeptur ausgearbeitet wird, welche zu einem beschleunigten biochemischen und physikochemischen Umwandlungsprozeß (Bodenbildungsprozeß) und nach Stabilisierung desselben, zu vorgegebenen Eigenschaften des neugebildeten Substrats führt.

Diese Eigenschaften entsprechen solchen von möglichst standortangepaßten, kulturfähigen, mikrobiologisch aktiven Böden und zwar:

a) Durch ihre stoffliche Zusammensetzung und
b) durch ihre ökologischen Bodenfunktionen, welche sie speziell als Deponieabdeckmaterial qualifizieren.

Zur Erreichung dieses Zieles wird, in Erweiterung des Patentes Nr. AT 401051 B, die endgültige Rottemischung hergestellt und das Material entweder auf einem dafür vorgesehenen Rotteplatz verbracht und nach vollendeter Rotte als Rekultivierungsschicht aufgebracht oder direkt zum Zweck der Flächenkaltrotte in seine endgültige Verwendungsfläche eingebaut (= "Vererdung in situ").

Die Einbaumächtigkeit richtet sich nach der klimatischen Wasserbilanz des Deponiestandortes und der sogenannten "Feldkapazität" des Erdmaterials, wozu folgende vereinfachte Formel herangezogen werden kann:

$$H = \frac{(N-ETa).i}{10 \, FK} \cdot f_1 \cdot f_2 \, ,$$

worin

N = Niederschlag (mm pro Dekade oder Monat)
ETa = Reale Verdunstung (mm pro Dekade oder Monat)
i = Anzahl der zur Berechnung herangezogenen Zeitabschnitte. (Bei Monat = 12, Dekade = 36,5)
FK = Feldkapazität (= Wassergehalt in Vol.-% bei 0,33 bar Saugspannung)
$f_1$ = Streuungsfaktor der Niederschlagsereignisse
$f_2$ = Setzungsfaktor (1,15)
H = Schichtmächtigkeit

bedeuten.

Die Formel berücksichtigt nicht das Auftreten von "Fremdwasserzufluß", da davon ausgegangen wird, daß dieses projektbedingt nicht auftreten kann.

Es wird weiter vorausgesetzt, daß das Erdmaterial ein Gesamtporenvolumen von mindestens 50 % aufweist, die Feldkapazität mindestens 30 Vol.-% beträgt und der Welkepunkt (15 bar Saugspannung) im Bereich von 12-15 Vol.-% liegt.

Dem Material wird so lange geschreddertes Holz oder sonstiges geeignetes Strukturmaterial zugefügt, bis ein Erosionsschutz und die Sicherung der Durchlüftung gewährleistet ist.

Aus obiger Formel ergeben sich Schichtmächtigkeiten, welche in der Größenordnung von 2 m liegen und die bei entsprechender mikrobiologischer Aktivität der Erde wie ein potenter Biofilter wirken. Organische, bodenfremde Stoffe werden ab- oder in bodeneigene Stoffe umgebaut. Dies gilt nicht nur für atmosphärische Immissionen, sondern auch für gasförmige oder kapillar in den Bodenkörper eindringende Stoffe aus der Deponie. Auch aus dieser Fähigkeit begründet sich der technische Fortschritt gegenüber dem aktuellen Stand der Technik, welcher eines vergleichsweise hohen Aufwandes bedarf, um den Stoffaustritt aus der Deponie zu verhindern. Gleichzeitig ergibt sich eine deutliche Verbesserung in der Erosions- und Rutschungssicherheit. Nachhaltig wird diese Sicherheit verstärkt, weil es zu keinem Grenzflächeneffekt zwischen Deponieabdichtung und Rekultivierungsschicht kommt und weil durch die Mächtigkeit letzterer eine Lebendverbauung bzw. Scherfestigkeitserhöhung durch die Durchwurzelung erfolgt. Auch für Tiefenwurzler wird der nötige Raum zur Verfügung gestellt. Die Gefahr des Eindringens von Wurzeln in den Deponiekörper ist gleichzeitig entscheidend vermindert.

Praktisches Beispiel:

Als Ansatz für die Definition bzw. die Zielsetzung für ein funktionstüchtiges, hinreichend standortangepaßtes Oberbodenmaterial kann gelten: Der Boden und seine Eigenschaften (Merkmale) werden als Funktion von geologischem Ausgangsmaterial, Klimabedingungen, hydrologischen Verhältnissen und standorttypischen Biosystemen verstanden.

Die in dieser allgemeinen Funktion angesetzte "Bodendefinition" kann tabellarisch ergänzt bzw. dargestellt werden (Tabelle 1).

Tabelle 1:

| Standortskriterien, Komponenten und quantifizierbare Parameter zur Definition von angepaßten Erden für Deponieabdeckungen und Rekultivierungsflächen | | |
|---|---|---|
| Basiskriterien | Hauptkomponenten | Quantifizierbare Parameter |
| Geochemische Kriterien | Mineralische Komponenten d. anorg. Bestandteile, Verwitterung - Ionenfreisetzung Ton- und Sesquiooxidbildung Säure/Basen-Bilanz | Körnung (Bindigkeit) Kalkgehalt pH-Wert Sorptionskapazität Basensättigung Kationenbelegung Humusgehalt org. Kohlenstoff org. Stickstoff mineral. Stickstoff Humusformen .wasserlösliche - . adsorbierte - . verwitterbare - . Gesamtgehalte von Elementen einschließlich Schwermetalle |
| Klimatische Kriterien | METEOROLOG. INFORMATION Klimatische Wasserbilanz Sonnenenergiebindung | Niederschlag Temperatur Verdunstung Einstrahlung Wind Luftfeuchtigkeit |
| Hydrologische Kriterien | Wasserhaushalt Wasserspeicherkapazität | Porengrößenverteilung, Kapillarspannug - Wassergehalt Beziehung (pF-Kurve) Infiltration Perkolation Durchlüftung Verdichtungsneigung Struktur- (Aggregat-) Stabilität Erosionsgefahr |
| Biologische Kriterien | VEGETATION, Netto-Primär- Produktivität, Nährstoffkreislauf | Ertragsleistungen Photosyntheseraten Wasserbedarf Nährstoffbedarf |
| | ORGANSUBSTANZ-ABBAU (= Mineralisierung) Org.Substanz - Auf- u. Umbau (= Humifizierung) | Bodenleben Humushaushalt (C-Kreislauf) Stickstoff-Haushalt ($NO_3$-Auswaschung) |

Auswahl- und Beurteilungskriterien für Erden im bodenkundlichen Sinn sind grundsätzlich in zwei Bedingungsgruppen einzuteilen:

Bedingungsgruppe (A): Stoffliche Merkmale

Bedingungsgruppe (B): Funktionalität in der Landschaft bzw. an einem gegebenen Standort.

Die Abdeckung von Deponien bzw. auch anderen zu begrünenden Oberflächen lediglich mit einer sogenannten "bewuchsfähigen Schicht" ist vom Standpunkt einer naturwissenschaftlich orientierten Landschaftsökologie völlig unzureichend, weil ausschließlich die Funktion des "Pflanzentragens" verlangt wird, was auch nicht im Sinn des Gesetzgebers ist.

Anderseits steht für die Rekultivierung oder sachgemäße Begrünung nicht immer und nicht immer ausreichend Oberbodenmaterial zur Verfügung. Und wenn doch, ist nicht von vornherein selbstverständlich gewährleistet, daß dieses standortangepaßt ist und den erwähnten funktionellen Anforderungen entspricht.

Es erhebt sich also die Frage nach der Beschaffung großer Massen an Oberbodenmaterial, das sowohl die technischen als auch die landschaftsökologischen Anforderungen erfüllt.

Dafür eignet sich das Verfahren der gezielten und kontrollierten Vererdung von Abfallstoffen. Es wird in folgenden konzeptionellen bzw. technischen Schritten in Anlehnung an das Patent Nr. AT 401051 B durchgeführt.

1. Festlegung der Zielvorstellungen
2. Vorbeurteilung möglicher Ausgangsstoffe (VB)
3. Eingangskontrolle (EK)
4. Rezepterstellung
5. Prozeßüberwachung und Steuerung (PK1 - PK3)
6. Erste Qualitätskontrolle und Feinabstimmung der Rezeptur (QK1)
7. Überprüfung der Feinabstimmungsergebnisse (QK2)
8. Qualitätskontrolle des Endprodukts = Erde (EZ).

In der Praxis ergibt sich eine hohe Variabilität an Abfall- bzw. Vererdungsrohstoffen. Dies sowohl im Mengenangebot, wie in der chemischen Zusammensetzung, wie auch den physikochemischen Eigenschaften.

Häufig vorkommende Ausgangsstoffe sind:

- Entwässerter Klärschaum aus verschiedenen Kläranlagen
- Faserschlämme aus der Papier- und Zellstoffindustrie
- Alt- und Abfallholz
- Sägespäne bzw. Holzschliff
- Grünschnitt aus kommunalen Anlagen
- Sand- und Lehmaushubmaterial aus Großbaustellen
- Mineralschlämme aus Schotter- und Sandbereitungsanlagen u.a.m.

Die Zusammensetzung dieser Stoffe schwankt in weiten Grenzen.

Bei der Zusammenführung der Reaktionskomponenten für den Vererdungsprozeß muß im Sinn eines definierten Endprodukts auf diese Schwankungen Rücksicht genommen werden. Dies geschieht mittels eines Computerprogramms, das für jede beliebige Rezeptmodifikation die zukünftige Zusammensetzung für die jeweils nächste Kontrolletappe und schließlich für das Endprodukt anzuschätzen erlaubt.

Mittels eines Zertifikates von einem akkreditierten Institut kann vom Erzeuger eine Qualitätsgarantie abgegeben werden.

Von besonderem Interesse ist aus mehreren naheliegenden Gründen der WASSERHAUSHALT des aus der Erde aufgebauten Bodenprofils bzw. der Abdeckschicht.

Vor allem sind die Wasserspeicherkapazität, aber auch die Beziehung von Wassergehalt und Wasserpotential (Kapillar- und osmotisches Potential) von besonderer Bedeutung. Es handelt sich dabei um die Beziehung zwischen dem Gesamtporenvolumen bzw. der Porengrößenverteilung im Endprodukt "Erde" und dem Energiezustand des Porenwassers.

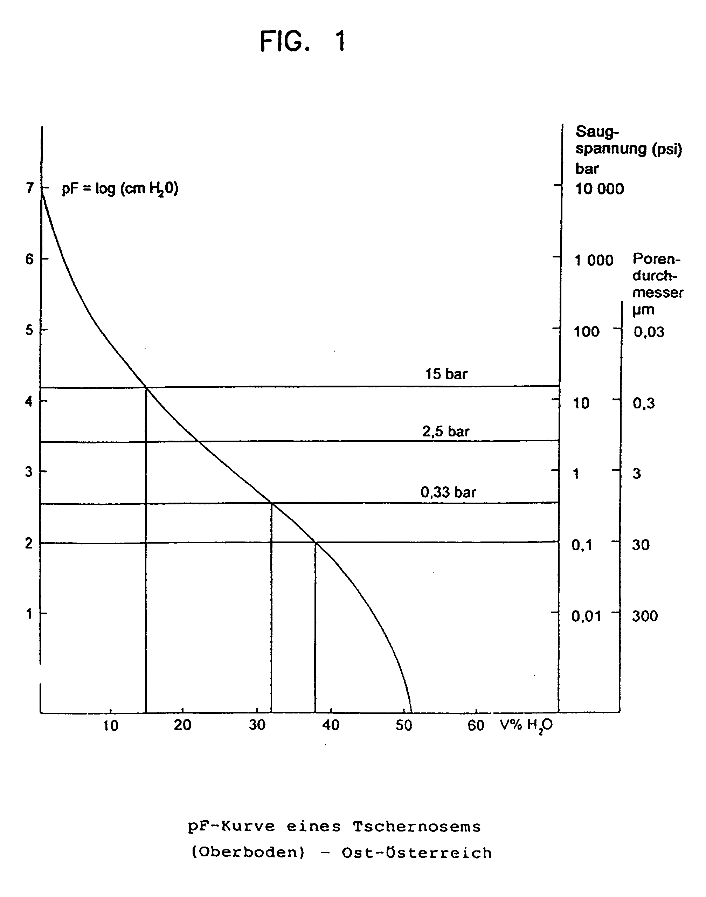

Eine derartige Beziehung ist beispielhaft in Fig. 1 aufgestellt.

Aus der Kurve läßt sich ablesen, mit welcher Kapillarspannung das jeweils auftretende Porenwasser festgehalten wird. Danach ist der Anteil an frei perkolierendem Sickerwasser, das Gesamtspeichervermögen, die Feldkapazität sowie der pflanzenverfügbare Wasseranteil feststellbar.

Z.B. würden sich folgende Werte ergeben:

15,0 bar Saugspannung 15 Vol.-% Wassergehalt = "Welkepunkt"
0,33 bar Saugspannung 32 Vol.-% Wassergehalt = "Feldkapazität"
0,0 bar Saugspannung 52 Vol.-% Wassergehalt = "Volle Wassersättigung"

Die Feldkapazität ist derjenige Wassergehalt, der 1-3 Tage nach voller Sättigung gegen die Versickerung vom Boden festgehalten wird.

Die volle Wassersättigung tritt ein, wenn das Gesamtporenvolumen mit Wasser erfüllt ist.

Der Welkepunkt ist der Wassergehalt, bei welchem die meisten Pflanzen permanent in ein Welkestadium eintreten, weil sie aufgrund der starken Saugspannung des Bodenwassers in den Feinporen dieses nicht mehr aufnehmen können.

Danach ergeben sich für den Beispielsfall:

17 Vol.-% (= 32 Vol.-% - 15 Vol.-%) als pflanzenverfügbar und

20 Vol.-% (= 52 V % - 32 Vol.-%) als Sickerwasser

Falls keine Sickerungshemmung durch verdichtete Schichten auftritt, entleeren sich also die Grobporen, welche hier 20 Vol.-% einnehmen, innerhalb von 1-3 Tagen.

Im Zustand der "Feldkapazität" sind demnach 1-3 Tage nach Sättigung 20 Vol.-% wieder wasserfrei und daher lufterfüllt (= Luftkapazität). Damit ist eine ausreichende Sauerstoffversorgung der Bodenbiosysteme gewährleistet.

Bei zu geringer Luftkapazität der erzeugten Erde bzw. der daraus aufgebauten Abdeckschicht, würde Sauerstoffmangel die Entwicklung von Bodenleben, vor allem der Durchwurzelung verhindern. Eine erosions- und rutschverhindernde Lebendverbauung könnte nicht erfolgen.

Das verminderte Redoxpotential würde dreiwertige Metallkationen, zu denen auch Schwermetalle zählen, zu zweiwertigen reduzieren und sie dadurch löslich und beweglich machen.

Im Sättigungsbereich des Bodenprofils, insbesondere an "glatten" Grenzschichten, also etwa zwischen Dichtschicht einer Deponieabdeckung und dem Bodenmaterial, würde die Wassersättigung durch Herabsetzen der Scherfestigkeit und Überschreiten der Fließgrenze schon bei relativ flachen Böschungen zu Rutschungen führen.

Neben der entsprechenden Gestaltung der Abdichtungsoberkante sind daher eine entsprechende Porengrößenverteilung und die Profilmächtigkeit des zukünftigen Bodenprofils zu dimensionieren.

Diese wieder ist nur unter Berücksichtigung der örtlichen hydroklimatischen Bedingungen bzw. Ereignisse berechenbar.

Als Grundlage der Berechnung der anzustrebenden Profilmächtigkeit sollten also

a) der anzustrebende Wurzelraum für die zukünftige Vegetation und

b) die zur Abpufferung der hydrologischen Maximalereignisse nötigen Speicherkapazitäten dienen.

Für beide Fragestellungen liefert die klimatische Standorts-Wasserbilanz ein brauchbares Hilfsmittel.

Diese ermittelt man durch Gegenüberstellung der Niederschläge und der Verdunstung.

Allerdings empfiehlt es sich, die aktuelle (reale) Evapotranspiration für die Verdunstung einzusetzen und nicht die potentielle, welche die maximale Verdunstung aus Boden, Transpiration der Pflanze und Interzeptionsverdunstung darstellt. Sie tritt nämlich nur ein, wenn optimale Wachstumsbedingungen bei geschlossener Vegetation vorliegen, was selten der Fall ist.

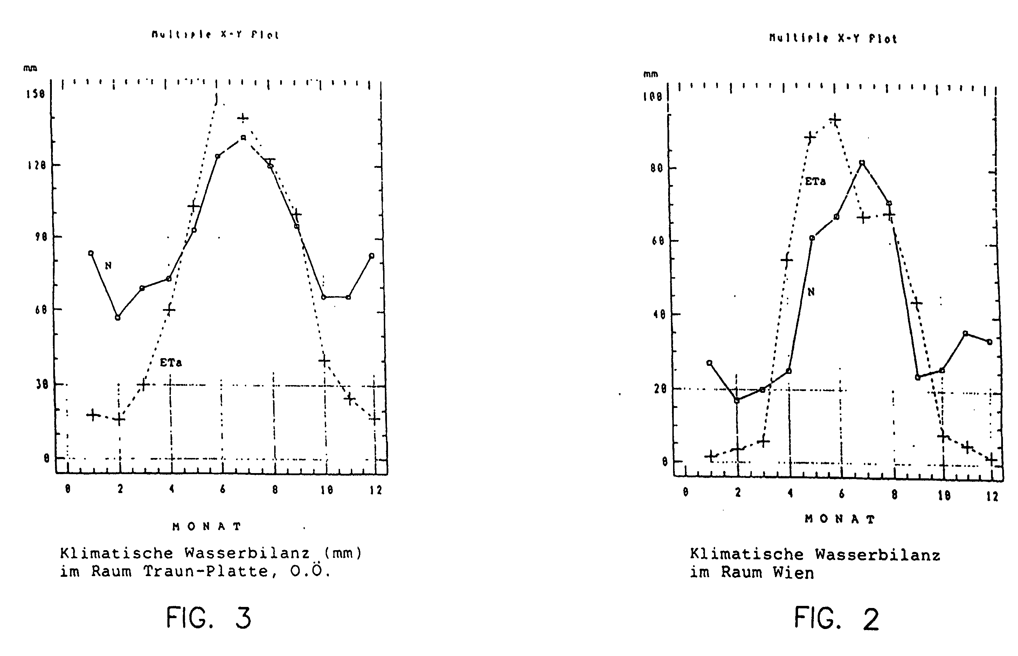

In den Fig. 2 und 3 sind die Wasserbilanzen zweier Standorte dargestellt.

Fig. 2 entspricht einem relativ trockenen Standort in Ost-Österreich (Marchfeld, pannonisches Steppenklima), Raum Wien.

Fig. 3 entspricht einem Klima der Traunplatte von Oberösterreich.

Aus solchen Bilanzen läßt sich abschätzen, welche Speicherkapazitäten zur Verfügung gestellt werden müssen, wenn Stauhorizonte vermieden werden sollen.

Man rechnet daraus die maximale akkumulierte Differenz aus Niederschlag und realer Verdunstung. Diese beträgt

| im Raum Wien etwa | 164 mm (Fig. 2) |
| im Oberösterreichischen Alpenvorland | 291 mm (Fig. 3), |

wobei die Akkumulation in beiden Fällen im Spätherbst, Winter bzw. Frühjahr am stärksten auftritt.

Die Schwankungen über die Jahre sind enorm und betragen langfristig an die 300 %, was dazu zwingt einen Sicherheitsfaktor von 3 für den schlechtesten Fall anzubringen (Streufaktor: 3).

Die Mächtigkeit (H) des Bodenprofils zur Abpufferung dieser "Maximalmengen" errechnet sich nach der Formel

$$H = \frac{(N\text{-}ETa).i}{10\ FK} \cdot f_1 \cdot f_2 ,$$

worin

N = Niederschlag (mm)/Monat oder Dekade
ETa = reale Verdunstung (mm)/Monat oder Dekade
i = Anzahl der eingesetzten Zeitabschnitte (Bei Monat: 12, bei Dekade: 36,5)
FK = Feldkapazität (= Wassergehalt in Vol.-% bei 0,3 bar Saugspannung
$f_1$ = Streuungsfaktor (z.B. 3)
$f_2$ = Setzungsfaktor (z.B. 1,15)
H = Schichtmächtigkeit (m)

bedeuten.

Die Formel berücksichtigt nicht das Auftreten von "Fremdwasser", da davon ausgegangen wird, daß dieses projektierungsbedingt nicht auftreten kann.

Tabelle 2:

| Benötigte Mächtigkeit (H) der Abdeckerde zur Abpufferung von Niederschlagsüberschreitungen | | |
|---|---|---|
| | Ost-Österreich | Oberösterreich |
| $(N\text{-}ETa)_{akk}$ (mm) | 164 | 291 |
| Streufaktor ($f_1$) | 3,0 | 2,2 |
| Setzungsfaktor ( $f_2$) | 1,15 | 1,05 |
| Feldkapazität FK (V %) | 32 | 34 |
| H (m) | 1,77 | 1,98 |

Tabelle 2 zeigt, daβ Mächtigkeiten von nahezu 2 m erforderlich sind, um Extremfälle von standorttypischen Niederschlagsüberschüssen abzupuffern. Sind solche Mächtigkeiten nicht möglich, müssen Stauzonen durch Drainage vermieden werden.

**Patentansprüche**

**1.** Verfahren zur Herstellung einer Abdeckung eines Deponiekörpers mittels naturnahen Oberbodenmaterials, wobei auf den Deponiekörper als Abdeckung direkt, gegebenenfalls nach Aufbringen einer einzigen Zwischenschicht, Erde, die natürlichen Ursprungs oder vorwiegend aus Abfallstoffen erzeugte Erde ist, aufgetragen wird und den Austritt von Deponiegas, -wasser oder Schadstoffen in die Umgebung verhindert, gleichzeitig eventuelle Rutschungen und Erosionen hintanhält und als Rekultivierungsschicht dient, welche sich nachhaltig wie natürliche Böden als Landschaftsbestandteil integriert.

**2.** Verfahren nach Anspruch 1, **dadurch gekennzeichnet, dass** Erde verwendet wird, deren Wasserhaushalt durch folgende Kenngrößen charakterisiert ist:

| Welkepunkt (15 bar Saugspannung) | > 10 Vol.- % |
|---|---|
| Feldkapazität (0,33 bar Saugspannung) | > 30 Vol.- % |
| Volle Wassersättigung (0 bar Saugspannung) | > 50 Vol.- % |

**3.** Verfahren nach Anspruch 1 oder 2, **dadurch gekennzeichnet, dass** die Schichtmächtigkeit der Abdeckung nach der klimatischen Wasserbilanz des Deponiestandortes bzw. nach der folgenden Formel berechnet wird:

$$H = \frac{(N\text{-}Eta)\cdot i}{10\,FK} \cdot f_1 \cdot f_2\,,$$

worin

N = Niederschlag (mm) / Monat oder Dekade
Eta = reale Verdunstung (mm)/ Monat oder Dekade
i = Anzahl der eingesetzten Zeitabschnitt (bei Monat: 12; bei Dekade: 36,5)
FK = Feldkapazität (= Wassergehalt in Vol.- % bei 0,3 bar Saugspannung
$f_1$ = Streuungsfaktor (z.B. 3)

$f_2$ =   Setzungsfaktor (z.B. 1,15)
H =   Schichtmächtigkeit (m)

bedeuten.

**4.** Verfahren nach Anspruch 1, **dadurch gekennzeichnet, dass** bei Hängigkeit des Oberflächengeländes der Deponie als Zwischenschicht eine Ausgleichsschicht mit kantkörnigem Material eines Korndurchmessers von 5 - 12 cm in einer Mächtigkeit von 20 - 50 cm aufgelegt und mäßig verdichtet wird.

**5.** Verfahren nach Anspruch 1, **dadurch gekennzeichnet, dass** zur Begegnung der Gefahr des Eintritts von Schadstoffe enthaltendem, kapillarem Deponiewasser in die Abdeckung als Zwischenschicht eine Ausgleichsschicht mit einem Kalkgehalt von 10 - 25 % $CaCO_3$ gestaltet wird.

**6.** Verfahren nach Anspruch 1, **dadurch gekennzeichnet, dass** zur Begegnung der Gefahr des kapillaren Eintritts von Deponiewasser in die Abdeckung als Zwischenschicht eine chemische Barriere-Schicht eingebaut wird, welche die jeweils auftretenden Schadstoffe ausfällt oder bindet.

**Claims**

**1.** Method for producing a cover of a disposal site body by means of near-natural topsoil material, wherein earth of natural origin or earth predominantly produced from waste materials is applied directly to the disposal site body as a cover, optionally after applying a single intermediate layer, and prevents the escape of disposal site gas, water or pollutants into the environment, simultaneously suppresses possible sliding and erosion and serves as a recultivation layer which is integrated on a lasting basis like natural soils as a landscape component.

**2.** Method according to Claim 1, **characterised in that** earth whose water balance is **characterised by** the following characteristic quantities is used:

| | |
|---|---|
| wilting point (15 bar soil moisture tension) | > 10% by vol. |
| field capacity (0.33 bar soil moisture tension) | > 30% by vol. |
| full water saturation (0 bar soil moisture tension) | > 50% by vol. |

**3.** Method according to Claim 1 or 2, **characterised in that** the layer thickness of the cover is calculated according to the climatic water balance of the disposal site location or according to the following formula:

$$H = \frac{(N\text{-}Eta)}{10\ FK} \cdot \frac{1}{i} \cdot f_1 \cdot f_2,$$

wherein

N =   precipitation (mm)/month or decade
Eta =   actual evaporation (mm)/month or decade
i =   number of used time segments (for a month: 12; for a decade: 36.5)
FK =   field capacity (= water content in % by vol. at 0.3 bar soil moisture tension)
$f_1$ =   scattering factor (e.g. 3)
$f_2$ =   settlement factor (e.g. 1.15)
H =   layer thickness (m)

**4.** Method according to Claim 1, **characterised in that**, if the surface terrain of the disposal site slopes, a levelling layer with angularly granular material of a grain size of 5 - 12 cm is deposited in a thickness of 20 - 50 cm as intermediate layer and moderately compacted.

**5.** Method according to Claim 1, **characterised in that** a levelling layer with a lime content of 10 - 25% $CaCO_3$ is formed as intermediate layer in order to counter the risk of the ingress of capillary disposal site water containing pollutants into the cover.

**6.** Method according to Claim 1, **characterised in that** a chemical barrier layer is incorporated as intermediate layer in order to counter the risk of the capillary ingress of disposal site water into the cover, which layer precipitates or binds the respective occurring pollutants.

## Revendications

**1.** Procédé pour fabriquer un revêtement d'un corps de décharge au moyen d'un matériau de plafond proche de la nature, selon lequel sur le corps de la décharge on dépose, en tant que revêtement, directement, éventuellement après l'application d'une couche intermédiaire unique, de la terre qui est d'origine naturelle ou est produite de façon prépondérante à partir de matériaux de déchets, et cette terre empêche la sortie de gaz, d'eau ou de substances nocives de la décharge dans l'environnement, bloque simultanément d'éventuels glissements et érosions et est utilisée en tant que couche pour une nouvelle culture, qui s'intègre ultérieurement comme des sols naturels en tant qu'élément du paysage.

**2.** Procédé selon la revendication 1, **caractérisé en ce qu'**on utilise de la terre, dont le bilan de l'eau est **caractérisé par** les grandeurs caractéristiques suivantes :

> Point de flétrissage (tension d'aspiration 15 bars :
> \> 10 % en volume
> Capacité du terrain (tension d'aspiration 0,33 bar) :
> \> 30 % en volume
> Saturation complète d'eau (tension d'aspiration 0 bar) :
> \> 50 % en volume.

**3.** Procédé selon la revendication 1 ou 2, **caractérisé en ce que** l'épaisseur de couche du revêtement se calcule en fonction du bilan climatique de l'eau du lieu de décharge ou conformément à la formule suivante :

$$H = \frac{(N-Eta).i}{10\ FK} \cdot f_1.f_2,$$

N = dépôt (mm)/mois ou décade
Eta = évaporation réelle (mm)/mois ou décade
i = nombre de la tranche de temps utilisée (dans le cas d'un mois: 12, dans le cas d'une décade : 36,5)
FK = capacité de champ (= teneur en eau en % en volume pour une tension d'aspiration de 0,30 bar)
$f_1$ = facteur de dispersion (par exemple 3)
$f_2$ = facteur de tassement (par exemple 1,15),
H = épaisseur de couche (m).

**4.** Procédé selon la revendication 1, **caractérisé en ce que** dans le cas où le terrain superficiel de la décharge est en pente, on dispose comme couche intermédiaire une couche de compensation formée d'un matériau à grains anguleux ayant un diamètre de 5-12 cm sur une épaisseur de 20-50 cm et on le tasse modérément.

**5.** Procédé selon la revendication 1, **caractérisé en ce que** pour s'opposer au risque de pénétration d'eau capillaire de la décharge contenant des substances nocives, dans le revêtement, on utilise une couche de compensation avec une teneur en calcaire de 10-25 % $CaCO_3$.

**6.** Procédé selon la revendication 1, **caractérisé en ce que** pour combattre le risque de l'entrée capillaire d'eau de la décharge dans le revêtement on insère en tant que couche intercalaire une couche chimique formant barrière, qui sépare ou fixe les substances nocives qui apparaissent respectivement.

# FIG. 1

pF-Kurve eines Tschernosems
(Oberboden) – Ost-Österreich

Klimatische Wasserbilanz
im Raum Wien

FIG. 2

Klimatische Wasserbilanz (mm)
im Raum Traun-Platte, O.Ö.

FIG. 3